# EUROPÄISCHE PATENTSCHRIFT

(11) **EP 0 784 031 B1**
(45) Veröffentlichungstag und Bekanntmachung des Hinweises auf die Patenterteilung: **12.09.2001**
(21) Anmeldenummer: 96120511.9
(22) Anmeldetag: 19.12.1996
(51) Int. Cl.: C01B 17/90, C01B 17/92

(54) **Verfahren zur Reinigung von Schwefelsäure**
Process for the purification of sulfuric acid
Procédé de purification d'acide sulfurique

(30) Priorität: 11.01.1996 DE 19600810
(43) Veröffentlichungstag der Anmeldung: 16.07.1997
(73) Patentinhaber: Wacker-Chemie GmbH, 81737 München (DE)
(72) Erfinder: Mautner, Konrad, Dr., 84489 Burghausen (DE); Nagy, Gerhard, 5282 Ranshofen (AT); Kankowsky, Martin, 84375 Kirchdorf (DE)
(74) Vertreter: Fritz, Helmut, Dr.

(56) Entgegenhaltungen:
- EP-A- 0 084 674
- FR-A- 887 959
- GB-A- 2 110 681
- US-A- 2 345 506
- DATABASE WPI Section Ch, Week 8538 Derwent Publications Ltd., London, GB; Class C04, AN 85-234939 XP002027951 & SU 1 142 442 A (DZERZ LENGD CHEM EQ) , 28.Februar 1985
- DATABASE WPI Section Ch, Derwent Publications Ltd., London, GB; Class C04, AN 73-55105U XP002027952 & JP 47 042 598 A (TOYO ENGINEERING CORP)

## Beschreibung

Die Erfindung betrifft ein Verfahren zur Reinigung von Gebrauchtschwefelsäure, welche als Nebenbestandteile Methylschwefelsäure, Dimethylether, Methanol, aliphatische und olefinische Kohlenwasserstoffe, Chlorkohlenwasserstoffe und oligomere Siloxane enthält.

Bei der Direktsynthese von Methylchlorsilanen wird Chlormethan eingesetzt. Das erforderliche Chlormethan wird meist aus Methanol und Chlorwasserstoff hergestellt, wobei als Nebenprodukte Wasser und in geringen Mengen Dimethylether entstehen. Chlormethan für die Herstellung von Methylchlorsilanen muß sorgfältig getrocknet und von Dimethylether befreit werden.

Der für die Herstellung von Chlormethan verwendete Chlorwasserstoff stammt zum überwiegenden Teil aus Hydrolysereaktionen von Methylchlorsilanen. Daher sind im hergestellten Chlormethan auch Nebenbestandteile der Methylchlorsilane, wie aliphatische und olefinische Kohlenwasserstoffe und Chlorkohlenwasserstoffe zu finden. Wird der Chlorwasserstoff aus Hydrolysereaktionen von Methylchlorsilanen ohne Zwischenreinigung direkt in der Chlormethanerzeugung eingesetzt, so können zusätzlich oligomere Siloxane entsprechend dem Dampfdruck in das Produkt gelangen.

Das Chlormethan kann von vorstehend genannten Verunreinigungen durch eine Wäsche mit konzentrierter Schwefelsäure befreit werden. Neben Wasser und Dimethylether werden auch die übrigen Nebenbestandteile, besonders aber Olefine und oligomere Siloxane aufgrund ihrer Lewis-Base-Eigenschaft in der Schwefelsäure absorbiert. Die verbrauchte Schwefelsäure ist ca. 75 Gew.-%ig und muß ausgeschleust werden, da ihr Absorptionsvermögen für Dimethylether erschöpft ist.

In DE-A-25 03 610 ist ein Verfahren zur Reinigung von mit Methylschwefelsäure verunreinigter Schwefelsäure beschrieben. Dazu wird gebrauchte, aus der Reinigung von Chlormethan stammende Schwefelsäure mit 10 bis 25 Gew.-% Wasser, bezogen auf den Schwefelsäuregehalt, verdünnt. Anschließend wird Dampf eingeleitet, wobei eine Temperatur von 170 bis 180 °C erreicht wird, bei der der Anteil an Methylschwefelsäure zu Methanol und Schwefelsäure hydrolysiert und Methanol abdestilliert wird.

Das Verfahren nach DE-A-25 03 610 ist für Schwefelsäure, die neben Methylschwefelsäure, Dimethylether und Methanol noch zusätzliche vorstehend beschriebene Verunreinigungen enthält, nicht anwendbar, da es aufgrund der hohen Temperatur zu Crackprozessen kommt. Der dabei entstehende Kohlenstoff ist koksartig fest und führt zum schnellen Zuwachsen von Apparateteilen. Die hohe Säurekonzentration nach dem Aufkonzentrieren der Säure bewirkt außerdem eine geringe Oxidation organischer Anteile. Dadurch wiederum wird Schwefeldioxid freigesetzt, was eine zusätzliche Abgasbelastung darstellt.

In der Broschüre "Schott Engineering, 1987" von Schott Engineering GmbH, Mainz, Seite 12 bis 17 ist ein Verfahren zur Konzentrierung und Reinigung von Abfallschwefelsäure beschrieben, bei dem problemspezifisch Oxidationsmittel der Abfallsäure zugegeben werden.

Die Oxidation von organischen Verunreinigungen ist bei hohen Belastungen aufwendig, da große Mengen Oxidationsmittel zugesetzt werden müssen. Die Oxidation siliciumorganischer Verbindungen führt zu kolloidal verteilter Kieselsäure. Die Filtration stellt aufgrund des agressiven Mediums und aufgrund der geringen Partikelgröße ein größeres Problem dar. Darüber hinaus birgt der Kontakt größerer Mengen eines Oxidationsmittel mit der Dimethylether-haltigen Schwefelsäure ein erhebliches Sicherheitsrisiko in sich.

Die Zugabe von Oxidationsmitteln im Anschluß an das in DE-A-25 03 610 beschriebene Verfahren ist auch nicht zweckmäßig, da die groben Kokspartikel aufgrund der kleinen Oberfläche im Vergleich zu der Menge nur schwer und langsam oxidiert werden.

Aufgabe war es, ein Verfahren zur Reinigung von Gebrauchtschwefelsäure bereitzustellen, bei dem die vorstehend erwähnten Nebenbestandteile effektiv entfernt werden, und wenig Oxidationsmittel verbraucht werden.

Die Erfindung betrifft ein Verfahren zur Reinigung von Gebrauchtschwefelsäure, welche als Nebenbestandteile Methylschwefelsäure, Dimethylether, Methanol, aliphatische und olefinische Kohlenwasserstoffe, Chlorkohlenwasserstoffe und oligomere Siloxane enthält, bei dem die Gebrauchtschwefelsäure
1. durch Einleiten von Wasserdampf und gegebenenfalls Zugabe von flüssigem Wasser auf eine Konzentration von höchstens 55 Gew.-% an Schwefelsäure verdünnt und auf höchstens 135°C zum Sieden erhitzt und
2. bei einer Temperatur von 20 bis 130 °C mit Oxidationsmittel umgesetzt wird.

Im ersten Reinigungsschritt wird die verbrauchte Schwefelsäure bevorzugt mit flüssigem Wasser bei Umgebungstemperatur auf eine Konzentration verdünnt, deren Siedetemperatur bei 0,1 MPa höchstens 135°C, insbesondere höchstens 130°C ist und anschließend mit Wasserdampf behandelt.

Durch die Verdünnung mit flüssigem Wasser wird der absorbierte Dimethylether aus der Gebrauchtschwefelsäure freigesetzt und gast aus.

Die Gebrauchtschwefelsäure wird vorzugsweise im ersten Schritt nicht unter 45 Gew.-% an Schwefelsäure verdünnt, da bei einer späteren Aufkonzentration sonst zu viel Wasser entfernt werden muß.

Die freigesetzte Verdünnungswärme und der eingeblasene Wasserdampf erhitzen die Säure auf Siedetemperatur. 130°C entsprechen dem Siedepunkt einer 55 Gew.-%igen Schwefelsäure bei 0,1 MPa.

Der Wasserdampf bewirkt nach dem Prinzip der Wasserdampfdestillation eine Herabsetzung des Dampfdruckes der Nebenbestandteile, die mit dem Wasserdampf aus der Säure ausgetragen werden und dann einer geordneten Entsorgung zugeführt werden können.
Bei der Behandlung mit Wasserdampf kann auch unter vermindertem Druck gearbeitet werden.

Eingesetzt wird bevorzugt Dampf mit einer Temperatur von 120 bis 140 °C. Bei Temperaturen über 135 °C tritt die Verkoksung der Nebenbestandteile so schnell ein, daß es zu unkontrollierten Koksabscheidungen kommt.

Die eingesetzte Dampfmenge beträgt vorzugsweise 10 bis 200 Gew.-%, insbesondere 20 bis 60 Gew.-%, bezogen auf die Menge an Schwefelsäure in der Gebrauchtschwefelsäure.

Durch das Einleiten von Wasserdampf in die siedende verdünnte Schwefelsäure werden die oligomeren Siloxane entfernt und weitere Nebenbestandteile, wie Methanol, aliphatische und olefinische Kohlenwasserstoffe und Chlorkohlenwasserstoffe zumindest teilweise entfernt. Bei den oligomeren Siloxanen handelt es sich hauptsächlich um Cyclodimethylsiloxane, z.B. Hexamethylcyclotrisiloxan, Octamethylcyclotetrasiloxan, Dekamethylcyclopentasiloxan und Dodekamethylcyclohexasiloxan und lineare Siloxane, wie Hexamethyldisiloxan, Octamethyltrisiloxan, Dekamethyltetrasiloxan und Dodekamethylpentasiloxan und α-ω Siloxandiole, wie Tetramethyldisiloxandiol, Hexamethyltrisiloxandiol und Octamethyltetrasiloxandiol. Bei den gegebenenfalls chlorierten Kohlenwasserstoffen handelt es sich hauptsächlich um Alkane und Olefine mit 6 bis 7 Kohlenstoffatomen.

Als Maß für die organische Belastung der Gebrauchtschwefelsäure kann der CSB (Chemischer Sauerstoffbedarf, d.h. Verbrauch an Sauerstoff zur vollständigen Oxidation in mg/l) betrachtet werden. Die aus dem Chlormethan-Waschprozeß stammende Gebrauchtschwefelsäure hat einen CSB von üblicherweise mindestens 100000 mg/l. Die Säure weist nach dem ersten Reinigungsschritt nur mehr einen CSB von höchstens 10000 mg/l auf, ist aber meistens noch rotbraun verfärbt.

Wird die Gebrauchtschwefelsäure nicht genügend verdünnt, können die Nebenbestandteile nur ungenügend ausgetragen werden, da deren Wechselwirkungsenergie mit der Schwefelsäure noch zu hoch ist. Folge davon ist ein erhöhter Oxidationsmittelverbrauch im nachfolgenden Schritt, sowie eine Kieselsäurebelastung der Schwefelsäure. Die Kieselsäure entsteht durch Oxidation aus den oligomeren Siloxanen. Wird diese Säure, wie in DE-A-25 03 610 beschrieben, behandelt, so werden Methanol und Dimethylether fast vollständig entfernt. Olefine und Siloxane werden nur ungenügend oder gar nicht entfernt. Der CSB sinkt auf Werte von 20000 - 50000 mg/l. Es bilden sich koksartige Crackprodukte, die alle Anlagenteile verlegen können und die nicht chemisch, sondern nur mechanisch zu entfernen sind. Als Alternative böte sich die Filtration der Säure an. Die Filtration einer 170 °C heißen, ca. 65 - 70 %igen Schwefelsäure stellt allerdings extreme Anforderungen an die Materialien.

In einem zweiten Reinigungsschritt wird nun die restliche Belastung an oxidierbaren Anteilen durch Zugabe eines Oxidationsmittels entfernt. Als Oxidationsmittel werden bevorzugt Salpetersäure, Ozon, Chlor, Chlordioxid oder Wasserstoffperoxid eingesetzt. Bei Einsatz von Salpetersäure wird bevorzugt wäßrige HNO₃ mit einer Konzentration von 50 bis 70 Gew.- % verwendet. Bei Einsatz von Ozon kann mit UV-Licht die Oxidationsgeschwindigkeit erhöht werden. Bevorzugt eingesetzt wird Wasserstoffperoxid als 20 bis 50 Gew.- %ige, insbesondere 30 bis 35 Gew.- %ige Lösung in Wasser.

Die Oxidation erfolgt bevorzugt bei 80 bis 130°C, und Drücken von 0,03 bis 0,3 MPa, bevorzugt 0,09 bis 0,2 MPa. Die Menge des zugegebenen Oxidationsmittels wird aufgrund des ermittelten CSB-Wertes berechnet. Es wird mindestens die stöchiometrische Menge Oxidationsmittel zugegeben und vorzugsweise höchstens 200 % der berechneten Menge. Ein Überschuß Oxidationsmittel wird dann zugegeben, wenn das Oxidationsmittel zu thermischer und/oder katalytischer Eigenzersetzung neigt. So zersetzt sich Wasserstoffperoxid thermisch zu Wasser und Sauerstoff. Schwermetallionen, die als Verunreinigungen in der Säure vorhanden sein können, katalysieren diese Eigenzersetzung.

Die Reaktionszeit des zweiten Schritts beträgt vorzugsweise mindestens 15 min, insbesondere mindestens 30 min.

Nach dem zweiten Reinigungsschritt resultiert eine farblose, wasserklare Schwefelsäure, in der kein Silicium und keine Kohlenwasserstoffe nachweisbar sind.

Die im zweiten Schritt erhaltene Schwefelsäure kann in einem dritten Schritt wieder auf eine Konzentration gebracht werden, bei der ein erneuter Einsatz in der Chlormethanreinigung möglich ist. Bevorzugt wird die Schwefelsäure auf 90 bis 98 Gew.-% aufkonzentriert.

Geeignete Verfahren zum Konzentrieren von verdünnten Schwefelsäuren sind beispielsweise in "Ullmanns Encyklopädie der technischen Chemie", 4. Auflage, Bd 21, S. 117ff, Verlag Chemie, Weinheim (1982) beschrieben.

Alle Einzelschritte können im Batchbetrieb ausgeführt werden. Bevorzugt laufen die Aufarbeitungsschritte jedoch kontinuierlich ab.

### Beispiele

In den folgenden Beispielen wird eine verbrauchte Schwefelsäure mit folgender Zusammensetzung eingesetzt:

| | |
|---|---|
| Schwefelsäure | 80 Gew.-% |
| Wasser | 15 Gew.-% |
| Dimethylether | 4,5 Gew.-% |
| Dimethylcyclosiloxane | 0,2 Gew.-% |
| C₄-C₈-Kohlenwasserstoffe | 0,3 Gew.-% |
| Der CSB beträgt über | 200000 mg/l. |

### Beispiel 1 (analog DE-A-25 03 610; nicht erfindungsgemäß).

Die Gebrauchtschwefelsäure wird mit 10 Gew.-% Wasser verdünnt und von oben in eine mit Glasraschigringen gefüllte Glaskolonne (Länge 1 m, Durchmesser 50 mm) mit 1 l/h eingespeist. Von unten wird Wasserdampf mit einer Temperatur von 138°C eingeblasen und zwar in der Menge, daß die Temperatur der ablaufenden Säure 170°C beträgt. Die Konzentration der Säure beträgt 68 Gew.-%. Sie ist durch Crackprodukte und Kokspartikel tiefschwarz gefärbt. Der CSB beträgt 20000 mg/l. Zu dieser Säure werden 100 g/l HNO₃ (entspricht der 1,2fachen stöchiometrischen Menge) zudosiert. Nach 30 min bei 140 °C wird die Säure bei 5 kPa und 180°C aufkonzentriert. Es resultiert eine schwarze, feststoffhaltige (Kokspartikel und Kieselsäure) Schwefelsäure mit einer Konzentration von 91,2 Gew.-%.

### Beispiel 2

Die verbrauchte Schwefelsäure bei Raumtemperatur wird mit Wasser auf eine Konzentration von 55 Gew.-% verdünnt und von oben in eine mit Glasraschigringen gefüllte Glaskolonne (Länge 1 m, Durchmesser 50 mm) mit 1 l/h eingespeist. Von unten wird Wasserdampf mit einer Temperatur von 138°C eingeblasen und zwar in der Menge, daß die Temperatur der ablaufenden Säure 130°C beträgt. Die Konzentration der Säure beträgt 51 Gew.-%. Sie ist rotbraun gefärbt und enthält keine Feststoffpartikel. Der CSB beträgt 2000 mg/l. Zu dieser Säure werden 20 g/l H₂O₂ (entspricht der 1,6 fachen stöchiometrischen Menge) zudosiert. Nach 30 min bei 90°C wird die Säure bei 5 kPa und 180°C aufkonzentriert. Es resultiert eine farblose, wasserklare Schwefelsäure mit einer Konzentration von 90,4 Gew.-%, in der Silicium und Kohlenwasserstoffe nicht nachweisbar sind.

## Patentansprüche

1. Verfahren zur Reinigung von Gebrauchtschwefelsäure, welche als Nebenbestandteile Methylschwefelsäure, Dimethylether, Methanol, aliphatische und olefinische Kohlenwasserstoffe, Chlorkohlenwasserstoffe und oligomere Siloxane enthält, bei dem die Gebrauchtschwefelsäure
1. durch Einleiten von Wasserdampf und gegebenenfalls Zugabe von flüssigem Wasser auf eine Konzentration von höchstens 55 Gew.-% an Schwefelsäure verdünnt und auf höchstens 135°C zum Sieden erhitzt und
2. bei einer Temperatur von 20 bis 130 °C mit Oxidationsmittel umgesetzt wird.

2. Verfahren nach Anspruch 1, bei dem die Gebrauchtschwefelsäure im ersten Schritt nicht unter 45 Gew.-% an Schwefelsäure verdünnt wird.

3. Verfahren nach Anspruch 1 oder 2, bei dem im ersten Schritt Dampf mit einer Temperatur von 120 bis 140 °C eingesetzt wird.

4. Verfahren nach einem der Ansprüche 1 bis 3, bei dem das Oxidationsmittel im zweiten Schritt aus Salpetersäure, Ozon, Chlor, Chlordioxid und Wasserstoffperoxid ausgewählt wird.

5. Verfahren nach einem der Ansprüche 1 bis 4, bei dem die Umsetzung mit dem Oxidationsmittel im zweiten Schritt bei 80 bis 130°C erfolgt.

## Claims

1. Process for purifying used sulphuric acid which contains, as minor constituents, methylsulphuric acid, dimethyl ether, methanol, aliphatic and olefinic hydrocarbons, chlorinated hydrocarbons and oligomeric siloxanes, in which the used sulphuric acid
1. is diluted by introducing steam and, if appropriate, adding liquid water, to a concentration of at most 55% by weight of sulphuric acid and is heated to boiling at a maximum of 135°C and
2. is reacted with an oxidizing agent at a temperature of 20 to 130°C.

2. Process according to Claim 1, in which the used sulphuric acid is not diluted in the first step to below 45% by weight of sulphuric acid.

3. Process according to Claim 1 or 2, in which, in the first step, steam is used at a temperature of 120 to 140°C.

4. Process according to one of Claims 1 to 3, in which the oxidizing agent in the second step is selected from nitric acid, ozone, chlorine, chlorine dioxide and hydrogen peroxide.

5. Process according to one of Claims 1 to 4, in which the reaction with the oxidizing agent in the second step proceeds at 80 to 130°C.

## Revendications

1. Procédé pour la purification d'acide sulfurique usé qui contient comme composants secondaires de l'acide méthylsulfurique, de l'éther diméthylique, du méthanol, des hydrocarbures aliphatiques et oléfiniques, des hydrocarbures chlorés et des siloxanes oligomères, dans lequel
1. on dilue l'acide sulfurique usé par introduction de vapeur d'eau et éventuellement addition d'eau liquide, à une concentration d'au maximum 55 % en poids, et on le chauffe à l'ébullition à 135°C au maximum, et
2. on le fait réagir avec un oxydant à une température de 20 à 130°C.

2. Procédé selon la revendication 1, dans lequel l'acide sulfurique usé est dilué, dans la première étape, à une concentration non inférieure à 45 % en poids d'acide sulfurique.

3. Procédé selon la revendication 1 ou 2, dans lequel on utilise dans la première étape de la vapeur à une température de 120 à 140°C.

4. Procédé selon l'une quelconque des revendications 1 à 3, dans lequel l'oxydant dans la seconde étape est choisi parmi l'acide nitrique, l'ozone, le chlore, le peroxyde de chlore et le peroxyde d'hydrogène.

5. Procédé selon l'une quelconque des revendications 1 à 4, dans lequel la réaction avec l'oxydant dans la seconde étape est effectuée à 80-130°C.
